Europäisches Patentamt

(19) European Patent Office

Office européen des brevets

(11) Publication number : **0 445 042 A2**

(12) **EUROPEAN PATENT APPLICATION**

(21) Application number : 91400578.0

(22) Date of filing : 01.03.91

(51) Int. Cl.⁵ : **G06F 11/00**

(30) Priority : 01.03.90 JP 50254/90

(43) Date of publication of application :
04.09.91 Bulletin 91/36

(84) Designated Contracting States :
DE FR GB

(71) Applicant : FUJITSU LIMITED
1015, Kamikodanaka Nakahara-ku
Kawasaki-shi Kanagawa 211 (JP)

(72) Inventor : Iizuka, Hajime
2-2-2-405, Nijigaoka, Asao-ku
Kawasaki-shi, Kanagawa 215 (JP)
Inventor : Takahashi, Hitoshi
2-9-11-903, Kandaiji, Kanagawa-ku
Yokohama-shi, Kanagawa 221 (JP)

(74) Representative : Joly, Jean-Jacques et al
CABINET BEAU DE LOMENIE 55, rue
d'Amsterdam
F-75008 Paris (FR)

(54) Microprocessor for evaluating an application system.

(57)    The microprocessor (1) has a circuit portion (2) which prefetches instructions in sequence to sequentially execute the instructions.
   In correspondence with the prefetch of the instructions, a hold request signal issued from an external unit is fetched by another circuit portion (5) so that when a corresponding hold request signal is fetched during the execution of the prefetched instructions, the execution of the prefetched instructions is halted.

EP 0 445 042 A2

Fig. 8

## MICROPROCESSOR FOR EVALUATING AN APPLICATION SYSTEM

Background of the invention

Field of the Invention

The present invention relates to software and hardware development technologies for developing an application system employing a microprocessor, and more particularly relates to a microprocessor used for evaluating an application system in operation through an evaluation tool serving as a development system.

Description of the Prior Art

In general, in an application system employing the microprocessor, a development system called an evaluation tool is employed. The evaluation tool is substituted with a CPU portion, a memory portion and like portions of such application system in operation, and operates in an in-circuit emulation mode to support evaluation of the software, hardware and peripheral circuits of the application system in operation.

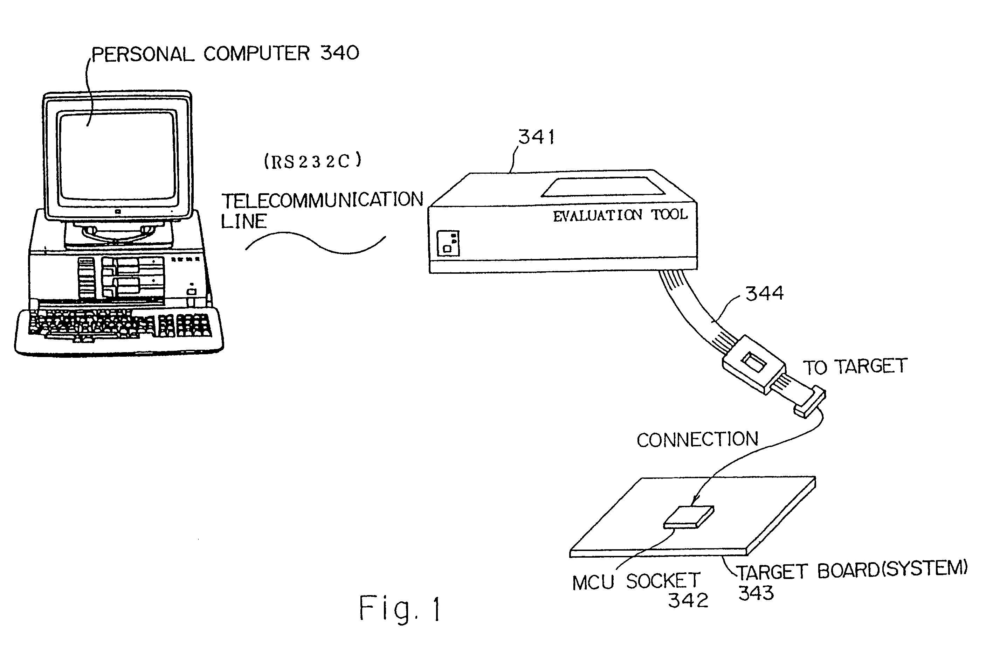

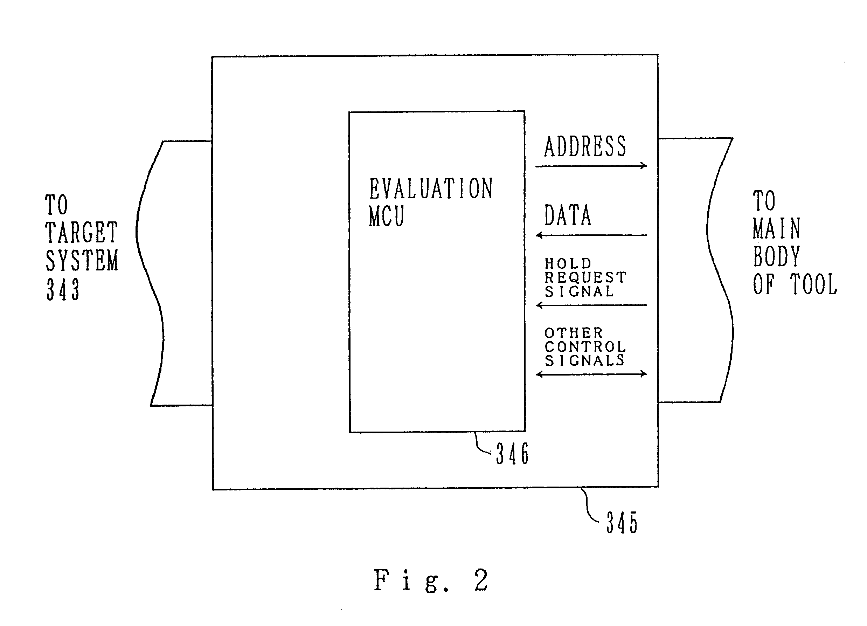

Figure 1 is a schematic perspective view of a conventional development system in which a personal computer 340 is coupled to an evaluation tool 341 through a telecommunication line with an interface RS232C. The computer 340 issues various commands to the evaluation tool 341 from which current data on the condition of a microprocessor or MCU is issued to the computer 340. The evaluation tool 341 is coupled in turn to an MCU socket 342 mounted on a target board (system)343, through a cable 344. As shown in Figure 2, in an intermediate portion of the cable 344 is provided a board 345 on which an evaluation MCU is disposed. The evaluation tool 341 monitors the condition of the evaluation MCU to confirm whether or not execution is proceeding.

In this evaluation system, the board 345 of the evaluation MCU may be replaced with another board to enable the evaluation system to evaluate another microprocessor.

In an application system employing a microprocessor utilizing the above evaluation system, or in software employed in the microprocessor, an instruction execution is temporarily halted or interrupted, while the values of registers at this interruption are confirmed for debugging.

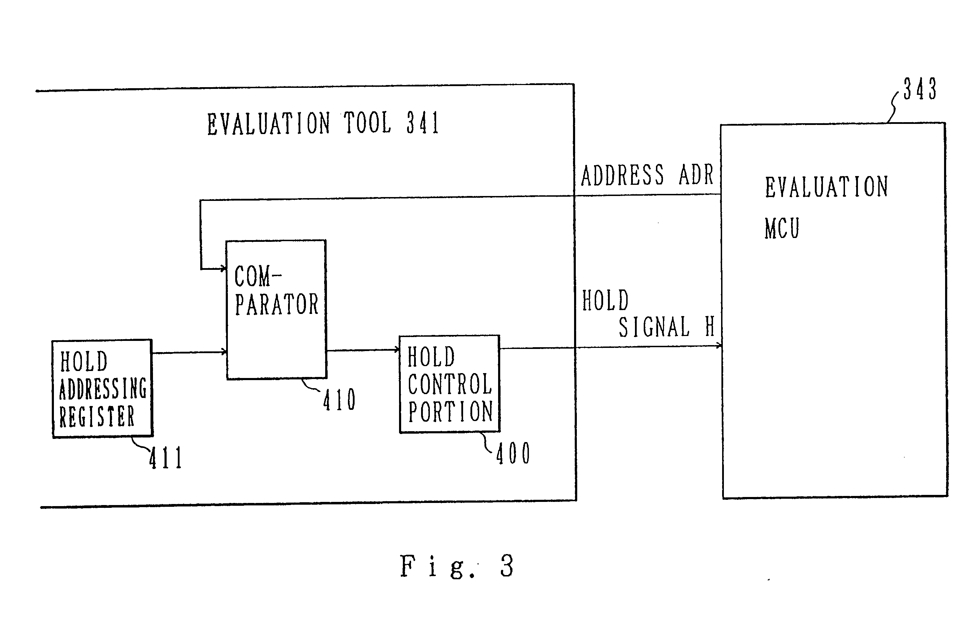

Figure 3 is a block diagram of the evaluation tool 341, illustrating the architecture of the tool. An address signal ADR transmitted from the evaluation MCU 346 is applied to a comparator 410. The address signal ADR is then compared with a hold address signal stored in a hold addressing register 411 to determine whether they coincide.

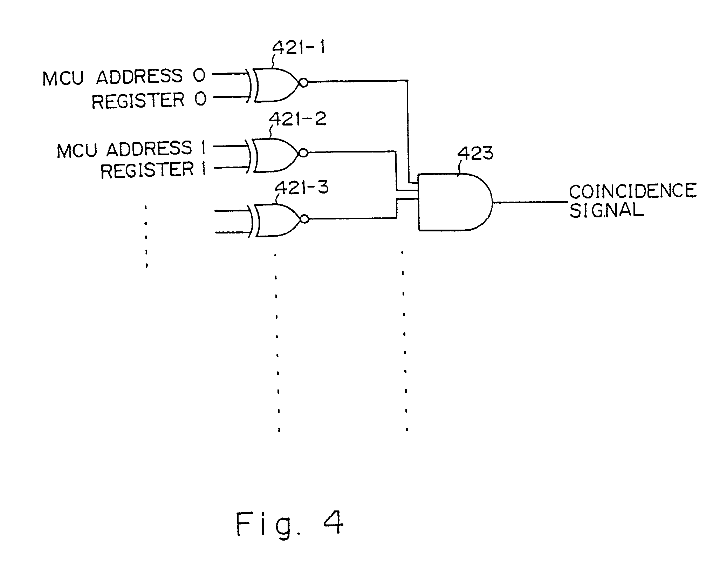

As shown in Figure 4, the comparator 410 is constructed of exclusive-NOR gates 421-1, 421-2 and 421-3 and an AND gate 423 to which these exclusive-NOR gates apply their output signals. In each of the exclusive-NOR gates 421-1, 421-2 and 421-3, the address signal issued from the evaluation MCU 346 is compared in bit units with the hold address signal stored in the hold address register 411. When the address signal ADR coincides with the hold address signal, each of the exclusive-NOR gates 421-1, 421-2 and 421-3 issues an H-level signal. The outputs of the exclusive-NOR gates 421-1, 421-2 and 421-3 are applied to the AND gate 430.

Where the hold address signals coincide with the address signals ADR in any of the exclusive-NOR gates 421-1, 421-2 and 421-3, any of these gates 421-1, 421-2 and 421-3 may issue the H-level signal to the AND gate 430, thereby permitting the AND gate 430 to issue a coincidence signal.

The coincidence signal issued from the AND gate 423 is applied to a hold control portion 400 which determines whether or not the coincidence signal is applied to the evaluation MCU 343. For example, in debugging, when the coincidence signal is applied to the evaluation MCU 343, a hold signal H is applied to the evaluation MCU 343 to halt execution.

As described above, in the conventional evaluation tool 341, when a memory in a specified area is accessed, the hold signal is issued to halt execution of the MCU. However, this procedure is only effective for the evaluation MCU, i.e., target MCU, which reads an instruction each time execution is made. It is not effective for a so-called prefetch-type MCU which prefetches the instruction. This is because, in the prefetch-type MCU, the currently executed instruction does not correspond to the memory address from which the instruction is currently read out. In addition, in the conventional microprocessor since the hold signal H is issued in the trace, it is very difficult to time the issuance of the hold signal H.

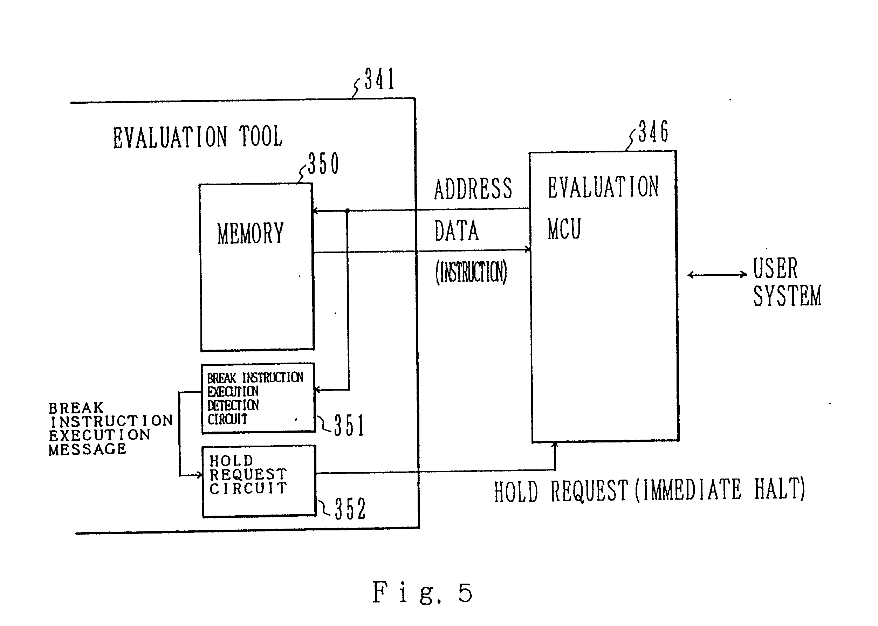

In this connection, there is a method for simplifying the timing of the issuance of the hold signal H. This method employs a break instruction. Figure 5 is a block diagram of the evaluation system employing the break instruction, illustrating the architecture of the evaluation system.

As shown in Figure 5, the evaluation tool 341 contains a memory 350 for storing programs (user programs) executed by the MCU. The user program stored at an address to be halted in execution is changed to the break instruction. The MCU contains specific instructions such as break instructions. When one of the specific instructions is executed, the contents of a register are fetched to a specific address. This specific address is detected by a break instruction execution detection circuit 351 which in turn sends a break instruction execution message to a hold request circuit 352. Then the hold request circuit 352 issues a hold request signal HOL to the MCU, thereby permitting the evaluation MCU 346 to halt the execution based on this hold request signal HOL.

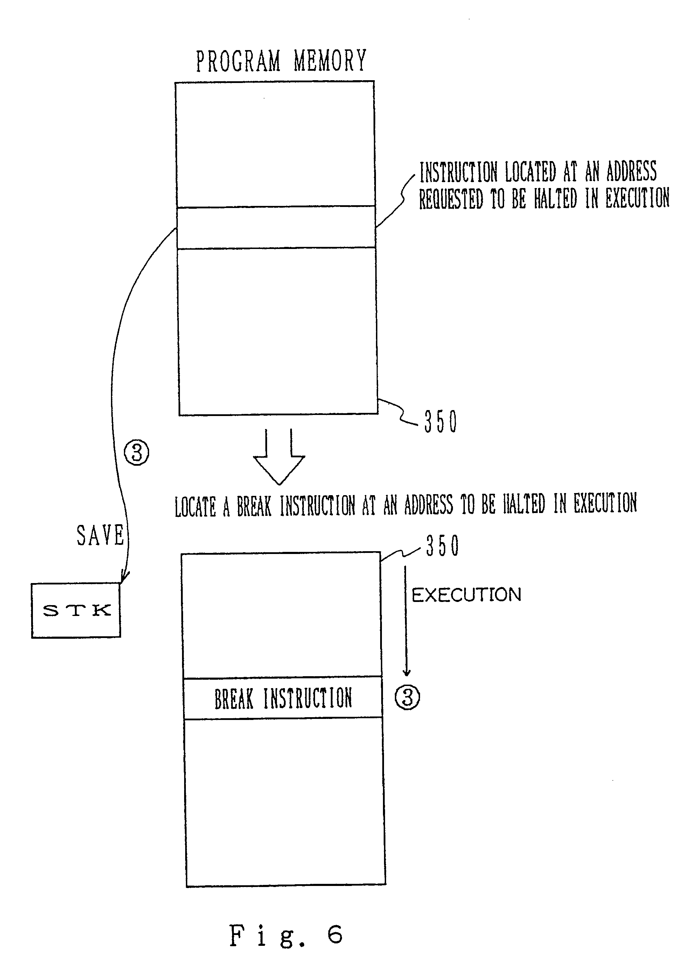

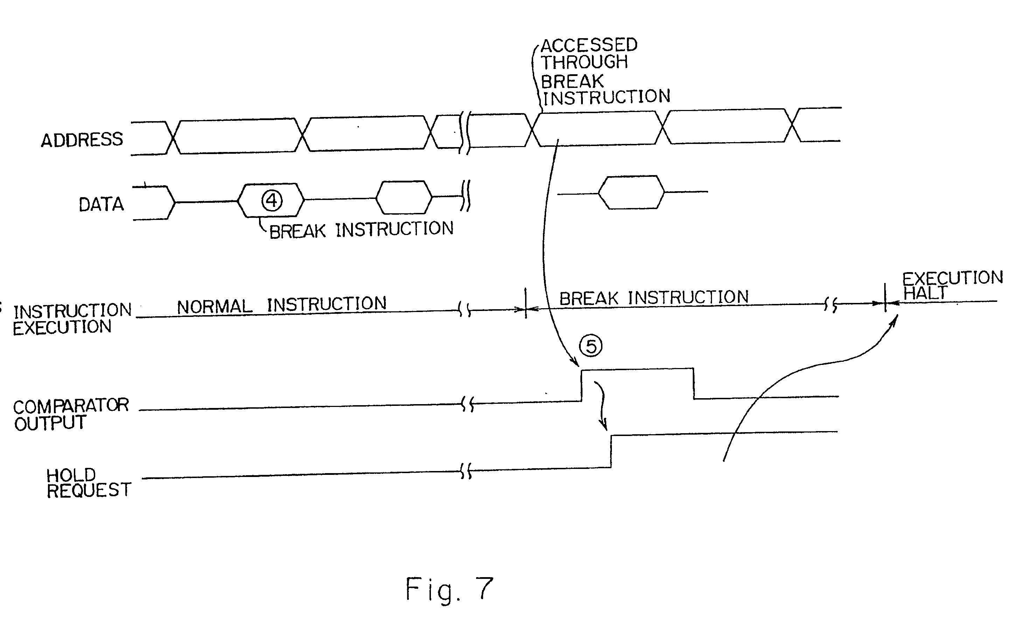

The above procedure is further described in detail below with reference to Figures 6 and 7.

(1) The MCU is put into a halt condition such as a reset condition.

(2) The instruction which is halted in execution while stored in the user program memory 350 of the tool at a specific address is put into a save area; and the break instruction is stored in the memory 350 at the specific address.

(3) The operation of the MCU is started (start execution).

(4) In response to the instruction fetch address from the MCU, the evaluation tool reads the instruction stored at the address to issue the instruction to the MCU. The MCU makes the execution after the instruction is prefetched.

(5) When the MCU executes the break instruction, the specific address is accessed, and this is detected by the break instruction execution detection circuit 351.

(6) According to the detection result made by the break instruction execution detection circuit 351, the hold request signal is applied to the MCU to halt the execution of the instruction.

According to the above procedure, since the break instruction is executed and the execution is detected, such execution and detection can be made without considering whether the MCU has an instruction prefetch queue. However, where the break instruction is executed in the user system, it is necessary to provide a specific judgment circuit for judging whether the break instruction is on the evaluation tool side or the user side. Further, where the execution is made through the memory of the evaluation tool, there is a problem. On the other hand, where it is desired to execute debugging through a ROM which stores the user programs, since the break instruction is not written, there is another problem that makes debugging impossible.

Summary of the Invention

It is an object of the present invention to provide a microprocessor for evaluating an application system in operation through an evaluation tool serving as a development system.

The above object of the present invention is accomplished by providing, in accordance with a first aspect of the present invention:

In a microprocessor which prefetches instructions in sequence to sequentially execute them, the improvement wherein:

in correspondence with the prefetch of the instructions, a hold request signal issued from an external unit is fetched; and

when the corresponding hold request signal is fetched during the execution of the prefetched instructions, the execution is halted.

The above object of the present invention is further accomplished by providing, in accordance with a second aspect of the present invention:

The microprocessor as set forth in the first aspect of the present invention, wherein:

the microprocessor is provided with a user terminal and is constructed on a single chip.

The above object of the present invention is further accomplished by providing, in accordance with a third aspect of the present invention:

The microprocessor as set forth in the second aspect of the present invention, wherein:

the microprocessor is further provided with a tool terminal coupled to an evaluation tool.

The above object of the present invention is further accomplished by providing, in accordance with a fourth aspect of the present invention:

The microprocessor as set forth in the first aspect of the present invention, wherein:

the hold request signal issued from the external unit is applied at a time when an address signal issued from the microprocessor coincides with a set address.

The above object of the present invention is still further accomplished by providing, in accordance with a fifth aspect of the present invention:

A microprocessor comprising:

an instruction prefetch means for prefetching an instruction issued from an external unit to store a plurality of instructions;

an instruction prefetch control means which issues a fetch address output signal to the external unit at a time when the instructions are prefetched, and issues a read control signal for reading the instructions to the instruction prefetch means at a time when the instructions are read out;

an instruction execution means for executing the instructions read out of the instruction prefetch means; and

a hold control means which, upon receipt of the read control signal and a hold request signal issued from the external unit, issues to the instruction execution means an instruction execution halt signal for halting the execution of one of the instructions before it is executed, the instructions being stored in the instruction prefetch means.

The above object of the present invention is further accomplished by providing, in accordance with a sixth aspect of the present invention:

The microprocessor as set forth in the fifth aspect of the present invention, wherein:

the instruction prefetch means is provided with a set of first registers of n pieces for prefetching the instructions; and

the hold control means is provided with a set of second registers of n pieces corresponding to the first registers of n pieces in a one-to-one correlation, each of the second registers being a one-bit type register for storing the hold request signal therein.

The above object of the present invention is further accomplished by providing, in accordance with a seventh aspect of the present invention:

The microprocessor as set forth in the sixth aspect of the present invention, wherein;

the instruction prefetch means is provided with both a write pointer and a read pointer;

according to the write pointer, the first and the second registers prefetch the instructions, and store the hold request signal therein; and

according to the read pointer, the prefetched instructions and the stored hold request signal are issued to the instruction execution means.

The above object, additional objects, additional embodiments and advantages of the present invention will be clarified to those skilled in the art hereinbelow with reference to the following description and accompanying drawings illustrating preferred embodiments of the present invention according to the principle of the present invention.

Brief Description of the Drawings

Figure 1 is a schematic perspective view of the development system;

Figure 2 is a plan view of the conventional evaluation MCU;

Figure 3 is a block diagram of the evaluation tool, illustrating the connection between the evaluation tool and the evaluation MCU;

Figure 4 is a circuit diagram of the comparator;

Figure 5 is a block diagram of the conventional evaluation system employing the break instruction, illustrating the architecture of the conventional evaluation system;

Figure 6 is a schematic representation of the hold procedure;

Figure 7 is a schematic representation of the MCU hold;

Figure 8 is a block diagram of the microprocessor of the present invention, illustrating the principles of the present invention;

Figure 9 is a schematic representation of the instruction prefetch means;

Figure 10 is a block diagram of an embodiment of the microprocessor of the present invention, illustrating its architecture;

Figure 11 is a timing chart of the embodiment of the present invention shown in Figure 10;

Figure 12 is a block diagram of the second embodiment of the evaluation MCU of the present invention, illustrating the architecture of the second embodiment of the evaluation MCU;

Figure 13 is a block diagram of the second embodiment of the evaluation system of the present invention;

Figure 14 is a timing chart of the evaluation system of the present invention shown in Figure 13; and

Figure 15 is a block diagram of a further embodiment of the present invention.

Description of the preferred embodiments

Hereinbelow, preferred embodiments of the present invention are described in detail with reference to the accompanying drawings.

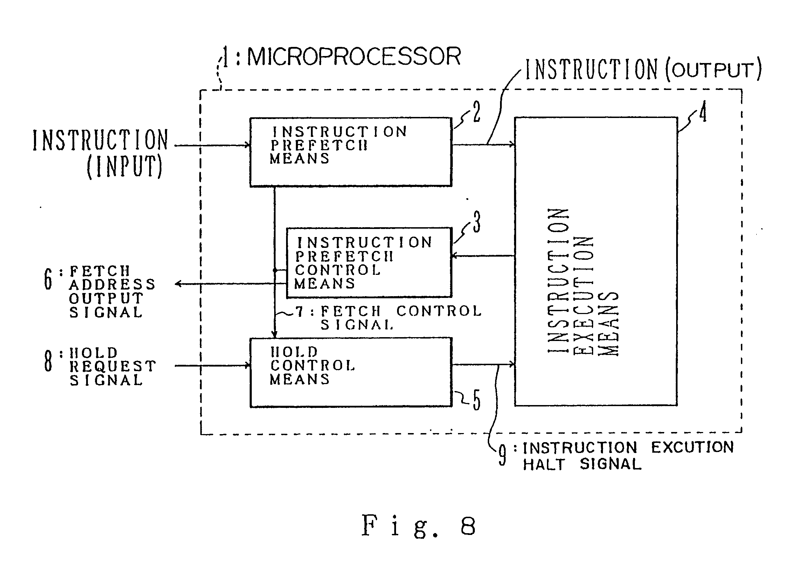

Figure 8 illustrates the principles of the present invention. As is clear from Figure 8, a microprocessor 1 of the present invention is constructed of an instruction prefetch means 2 for prefetching an instruction issued from an external unit to store a plurality of instructions; an instruction prefetch control means 3 which issues a fetch address output signal 6 to the external unit when the instructions are prefetched, and issues a read control signal 7 for reading the instructions to the instruction prefetch means 2 when the instructions are read out; an instruction execution means 4 for executing the instructions read out of the instruction prefetch means 2; and a hold control means (5, 130) which, upon receipt of the read control signal 7 and a hold request signal 8 issued from the external unit, issues to the instruction execution means 4 an instruction execution halt signal 9 for halting the execution of one of the instructions before the one is executed, the instructions being stored in the instruction prefetch means 2.

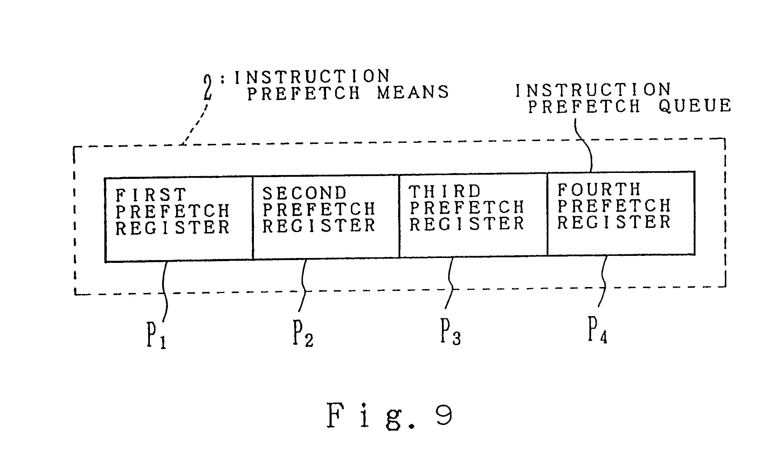

As shown in Figure 9, in the microprocessor 1 of the present invention, the instruction prefetch means 2 is constructed of, for example, an instruction prefetch queue comprising a first prefetch register $P_1$, a second prefetch register $P_2$, a third prefetch register $P_3$ and a fourth prefetch register $P_4$ for sequentially storing the instructions, and serves as a FIFO (first-in and first-out) memory.

In debugging, the user monitors the fetch address output signal 6 issued from the instruction prefetch means 3, and inputs the hold request signal 8 to the microprocessor 1. As a result, the hold control means 5 issues, to the instruction execution means 4 upon receipt of the read control signal 7 and the hold request signal 8 issued from the external unit, the instruction execution halt signal 9 for halting the execution of one of the instructions before it is executed, the instructions being stored in the instruction prefetch means 2.

Consequently, it is possible to halt the execution immediately before an instruction whose execution must be halted is read out of the instruction prefetch means 2. For example, where an instruction whose execution must be halted immediately before the execution is made is stored in the third prefetch register $P_3$ of the instruction prefetch means 2 shown in Figure 9, the hold control means 5 issues the instruction execution halt signal 9 to the instruction execution means 4 after completion of the execution of the instruction stored in the second prefetch register $P_2$ of the instruction prefetch means 2, thereby permitting the instruction execution means 4 to halt the execution.

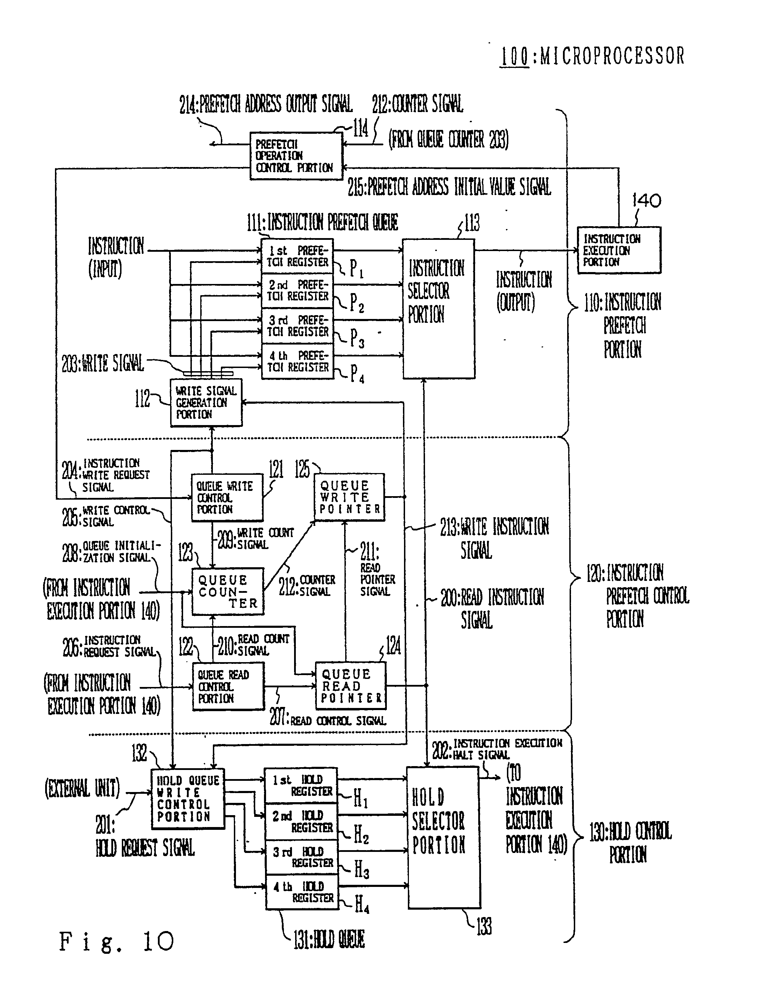

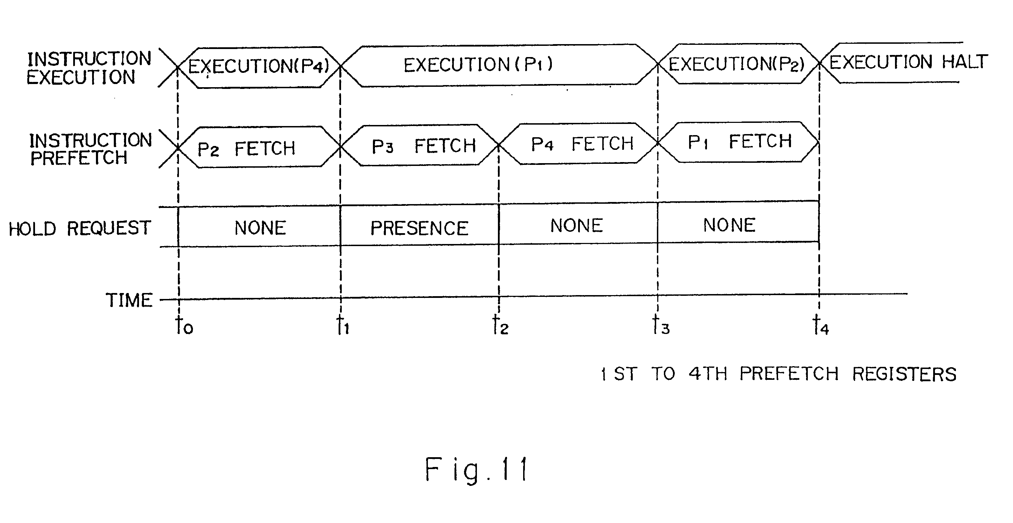

Now, a first embodiment of the present invention is described in detail with reference to Figures 10 and 11. In this embodiment, an instruction prefetch queue 111 is employed as the instruction prefetch means.

As shown in Figure 10, a microprocessor 100 of the present invention comprises an instruction prefetch portion 110 for prefetching an instruction issued from an external unit, the instruction prefetch portion 110 being provided with the instruction prefetch queue 111 which is constructed of the first prefetch register $P_1$, second prefetch register $P_2$, third prefetch register $P_3$ and a fourth prefetch register $P_4$ to store four instructions therein; an instruction prefetch control portion 120 which issues a read signal 200 for reading the instructions to the instruction prefetch portion 110; an instruction execution portion 140 for executing the instructions read out of the instruction prefetch portion 110; and a hold control portion 130 which, upon receipt of the read control signal 200 and a hold request signal 201 issued from the external unit, issues to the instruction execution portion 140 an instruction execution halt signal 202 for halting the execution of one of the instructions before it is executed, the instructions being stored in the instruction prefetch portion 110.

As shown in Figure 10, the instruction prefetch portion 110 of the microprocessor 100 of the present invention is constructed of an instruction prefetch queue 111 comprising the first prefetch register $P_1$, second prefetch register $P_2$, third prefetch register $P_3$ and fourth prefetch register $P_4$ each of which is a one-byte register; a write signal generation portion 112 for generating a write signal 203 which selectively enables the prefetch registers $P_1$ to $P_4$ to write the instructions; an instruction selector portion 113 which selects the registers $P_1$ to $P_4$ in sequence to read the instructions therefrom, and issues the instructions to the instruction execution portion 140; and a prefetch operation control portion 114 for controlling the prefetch operation.

The instruction prefetch queue control portion 120 of the microprocessor 100 is constructed of a queue write control portion 121 which issues a write control signal 205 to effect the write control of the instruction prefetch queue 111 and a hold queue 131 (described later) upon receipt of an instruction write request signal 204 issued from the prefetch operation control portion 114; a queue read control portion 122 which issues a read control signal 207 to effect the read control of the instruction prefetch queue 111 upon receipt of an instruction request signal 206 issued from the instruction execution portion 140; a queue counter 123 which selectively designates the prefetch registers $P_1$ to $P_4$ and a first to a fourth hold register $H_1$ to $H_4$ (described later ) upon receipt of a queue initialization signal 208 issued from the instruction execution portion 140, a write count signal 209 issued form the queue write control portion 121 and a read count signal 210 issued from the queue read control portion 122; a queue read pointer 124 which, upon receipt of the queue initialization signal 208 and the read control signal 207 issued from the queue read control portion 122, stores a pointer indicating the prefetch registers $P_1$ to $P_4$ and the hold registers $H_1$ to $H_4$ from which registers $P_1$ to $P_4$ and $H_1$ to $H_4$ the instructions are read out; and a queue write pointer 125 which, upon receipt of a read pointer signal 211 issued from a queue read pointer 124 and a counter signal 212 issued from the queue counter 123, stores a pointer indicating the prefetch registers $P_1$ to $P_4$ and the hold registers $H_1$ to $H_4$ to which registers $P_1$ to $P_4$ and $H_1$ to $H_4$ the instruction are written. This queue write pointer 125 issues a write instruction signal 213.

The hold control portion 130 of the microprocessor 100 is constructed of a hold queue 131 comprising the first to the fourth registers $H_1$ to $H_4$ each of which, upon receipt of the hold request signal 201 issued from the external unit, stores a one-bit data indicating whether or not a hold request is made; a hold queue write control portion 132 which writes the data representing the presence or absence of the hold request signal 201 to the hold queue 131; and a hold selector portion 133 which, upon receipt of the read signal 200 issued from the queue read pointer 124, selects the hold registers $H_1$ to $H_4$, and, according to the contents of the thus selected hold registers $H_1$ to $H_4$, issues the instruction execution halt signal 202 to the instruction execution portion 140.

Now, operation of the microprocessor 100 of the present invention shown in Figure 10 is described with reference to the timing chart shown in Figure 11. At a time $t_0$, the instructions are already stored in prefetch registers $P_1$ and $P_4$, while the remaining prefetch registers $P_2$ and $P_3$ are ready to store them. In addition, at this time $t_0$, data representing the absence of the hold request signal is already written in the hold registers $H_1$ to $H_4$.

In these circumstances, at the time $t_0$, the instruction execution portion 140 of the microprocessor 100 issues the instruction request signal 206 to the queue read control 122 of the instruction prefetch control portion 120. To read the instruction stored in the fourth prefetch register $P_4$, the queue read control portion 122 issues the read count signal 120 to the queue counter 123, and further issues the read control signal 207 to the queue read pointer 124. As a result, the queue counter 123 memorizes that next the contents of the fourth prefetch register $P_4$ is read out, and that after the read of the instruction is complete, it is possible to renew it. The queue read pointer 124 issues the read instruction signal 200 for selecting the fourth prefetch register $P_4$ and the fourth hold register $H_4$ to each of the instruction selector portions 113 and the hold selector portions 133.

Upon receipt of the read instruction signal 200, the hold selector portion 113 reads the contents of the fourth hold register $H_4$ to judge whether the hold request has been executed. At this time, since the contents or data stored in the fourth hold register $H_4$ contains data bits representing the absence of the hold request, the instruction execution halt signal 202 is not issued from the hold selector portion 133. Consequently, upon receipt of the read instruction signal 200, the instruction selector portion 113 reads the instruction stored in the fourth prefetch register $P_4$ to issue the instruction to the instruction execution portion 140.

As a result, the instruction execution portion 140 executes the instruction stored in the fourth prefetch register $P_4$.

On the other hand, the prefetch operation control portion 114 monitors a counter 212 issued from a queue counter 203 to judge whether the instruction can be written to the instruction prefetch queue 111. As a result, in a condition in which the instruction can be written to the instruction prefetch queue 111, the prefetch operation control portion 114 issues a prefetch address output signal to the external unit. At this time, in the prefetch operation control portion 114, an automatic add operation is performed to determine in value the prefetch address output signal 214. Where a branch instruction is executed in the instruction execution portion 140, the instruction execution portion 140 issues a prefetch address initialization signal 215 representing an initial value of a prefetch address to the prefetch operation control portion 114 to let the control portion 114 know the initial value of the prefetch address. Consequently, the prefetch operation control portion 140 employs such an initial value as its own initial value in a sequential add operation through which the prefetch address output signal 214 is produced.

Then, the external unit issues the instruction to the instruction prefetch queue 111 upon receipt of the prefetch address output signal 214. At the same time, the prefetch operation control portion 114 issues the instruction write request signal 204 to the queue write control portion 121.

Upon receipt of the instruction write request signal 204, the queue write control portion 121 issues the write control signal 205 to both the write signal generation portion 112 and the hold queue write control portion 132. The write control signal 205 is used for writing the data to both the second prefetch register $P_2$ and the second hold register $H_2$. In addition, the queue write control portion 121 further issues the write count signal 209 to the queue counter 123 to send thereto a message that the data must be written to both the second prefetch register $P_2$ and the second hold register $H_2$.

A a result, the write signal 203 is issued from the write signal generation portion 112 to the second prefetch register $P_2$ to enable the instruction to be written to the second prefetch register $P_2$, thereby permitting the instruction issued from the external unit to be stored in the second prefetch register $P_2$. The hold queue write control portion 132 permits the data representing the absence of the hold request to be written to the second hold register $H_2$. The queue counter 123 memorizes that the data is written to both the second prefetch register $P_2$ and the second hold register $H_2$.

As shown in Figure 11, at a time $t_1$ after completion of the execution of the instruction stored in the fourth prefetch register $P_4$ in the instruction execution portion 140, the portion 140 issues an instruction request signal to the instruction prefetch control portion 120.

As a result, as described above, the instruction stored in the first prefetch register $P_1$ is read out and executed. In the instruction prefetch portion 110, the instruction issued from the external unit is written to the third prefetch register $P_3$ and stored therein.

At the same time, when the external unit issues the hold request signal 201 to the hold queue write control portion 132, the portion 132 permits the data representing the presence of the hold request to be written to the third hold register $H_3$.

Then, at a time $t_2$ after completion of the write operation of the data to both the third prefetch register $P_3$ and the third hold register $H_3$, as in the above case, the data is written to both the fourth prefetch register $P_4$ and the fourth hold register $H_4$.

Further, at a time $t_3$ after completion of the execution of the instruction stored in the first prefetch register $P_1$, in the manner described above, the instruction execution portion 140 executes the instruction stored in the second prefetch register $p_2$. In the instruction prefetch portion 110, the instruction issued from the external unit is written to the first prefetch register $P_1$ and stored therein.

Then, at a time $t_4$ after completion of the execution of the instruction stored in the second prefetch register $P_2$, the hold selector portion 133 reads the contents of the third hold register $H_3$ upon receipt of the read instruction signal 200 to judge whether or not the hold request is made. At this time, since the data representing the presence of the hold request $H_3$ is contained in the data stored in the third hold register, the instruction execution halt signal 202 is issued from the hold selector portion 133 to the instruction execution portion 140.

Consequently, the execution of the instruction stored in the third prefetch register $P_3$ is halted by the instruction execution portion 140.

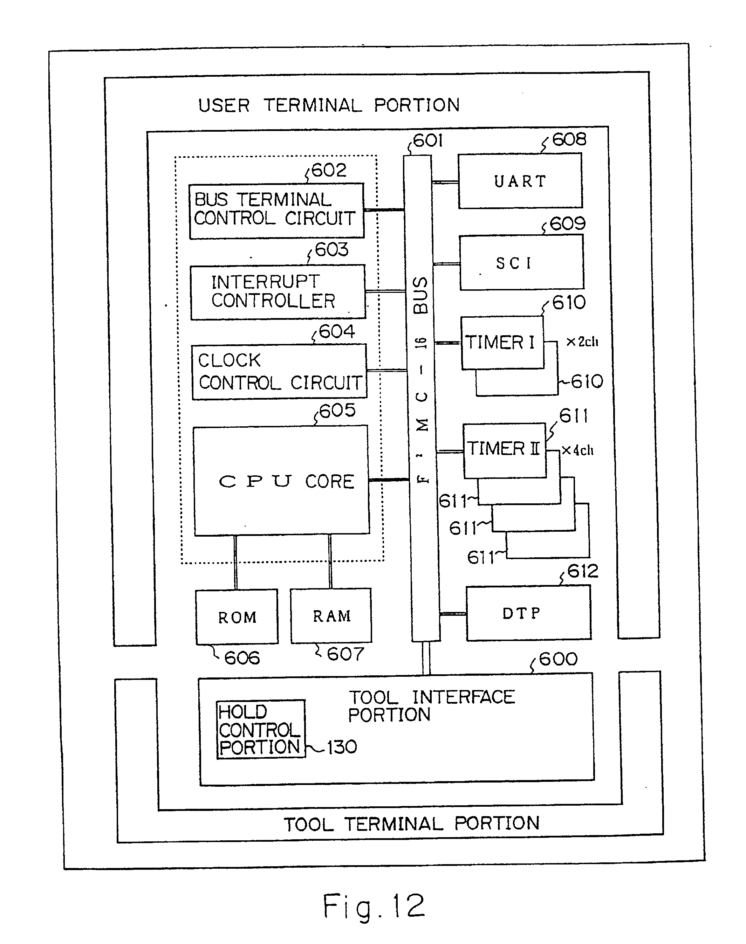

Figure 12 is a block diagram of the evaluation MCU, i.e., evaluation microprocessor, illustrating its architecture. The architecture is provided in a single chip OP in a peripheral area on which a user terminal UT and a tool terminal portion TT are provided. Although not shown in the drawings, the user terminal UT is constructed of a plurality of terminals, as for the user terminal employed in the single chip CPU. The tool terminal portion TT is provided with at least a hold request signal input terminal which constitutes a part of the hold control portion 130 of the microprocessor 100 shown in Figure 10. In the architecture of the evaluation MCU shown in Figure 12, there is provided a tool interface portion 600 coupled to the evaluation tool 341 through the tool terminal portion TT. Thus, in addition to the operation based on the hold request signal, various data can be issued to the evaluation tool 341. The tool interface portion 600 of the evaluation MCU shown in Figure 12 is connected with an F²MC-16 bus 601. Coupled to the F²MC-16 bus 601 are a bus terminal control circuit 602; an interrupt controller 603; a clock control circuit 604; a UART 608; an SCI 609; two channels of timers I 610; four channels of timers II 611; and a DTP 612. These components are provided in a central portion of the chip CP, as shown in Figure 12. The bus 601 forms 1/0 bus and the like. In addition, coupled to a CPU core 605 are a ROM 606 through its dedicated bus and a RAM 607 through its dedicated bus. The architecture of the chip CP shown in Figure 12 is characterized in that both of the tool interface portions 600 and the hold control portion 130 are provided on the chip CP.

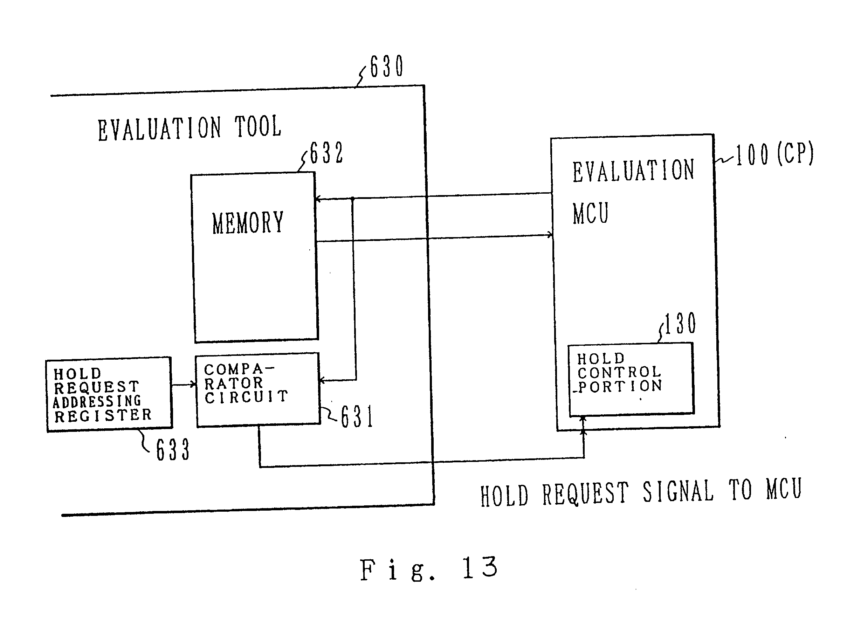

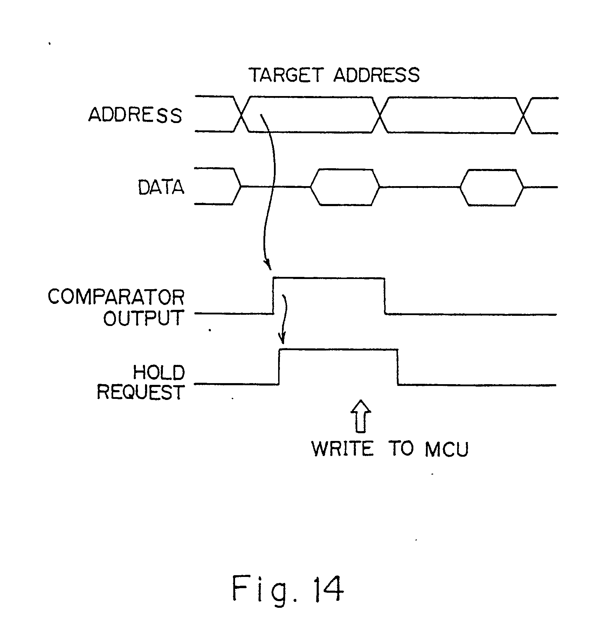

Figure 13 shows the architecture of the evaluation system employing the chip CP shown in Figure 12. An output issued from a comparator circuit 631 of the evaluation tool 630 is applied to the hold control portion 130 of the evaluation MCU 100. The comparator circuit 631 has the same construction as the comparator shown in Figure 4, and monitors the access to a memory 632 made by the evaluation MCU to issue the hold request signal to the MCU at a time when the accessed address coincides with the hold request address stored in a hold request addressing register 633 (see Figure 14). Consequently, upon receipt of the hold request signal, the evaluation MCU 100 (CP) operates as described above with reference to Figure 10, to hold the instruction at a target address. In addition, the same operation may be conducted in the evaluation tool 341 shown in Figure 3, in which tool 341 can also control the operation as to whether or not the output of the comparator 410 is applied to the evaluation MCU.

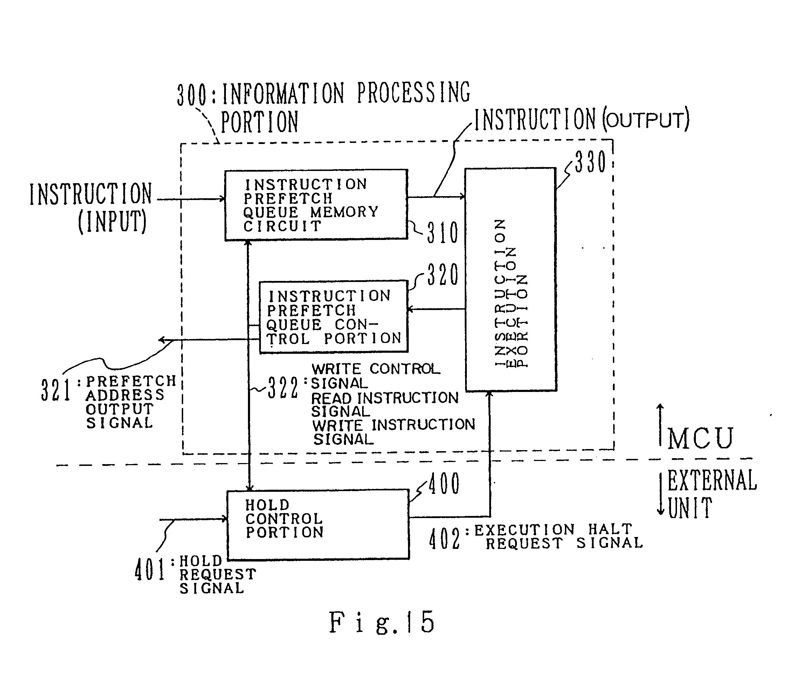

According to further embodiment of the present invention, as shown in Figure 15, a hold control portion 400 is provided in an external unit serving as the evaluation system, and an information processing portion 300 is provided in the evaluation MCU which is a microprocessor for evaluating the operation of the target system being developed.

As is clear from Figure 15, the information processing portion 300 is constructed of an instruction prefetch queue memory circuit 310 which prefetches instructions from the external unit to store a plurality of instructions therein; an instruction prefetch queue control means 320 which issues a fetch address output signal 321 to the external unit when the instructions are prefetched and issues a read instruction signal 322 for reading the instructions to the instruction prefetch queue memory circuit 310 when the instructions are read out; and an instruction execution means 330 for executing the instructions issued from the instruction prefetch queue memory circuit 310. Line 322 also includes a write control signal and write instruction signal.

To debug the information processing portion 300, a hold control circuit 400 is added as an external circuit to the information processing portion 300. Debugging is then executed through the hold control circuit 400.

Based on a hold request signal 401 inputted by an operator or user, the hold control circuit 400 issues an execution halt request signal 402 to the instruction execution means 330.

As described above, it is impossible for the user to monitor from the outside a time at which each of the prefetched instructions is executed. Consequently, in debugging, in order to temporarily halt the execution of one of the instructions immediately before it is made, it is necessary for the hold control circuit 400 to trace internal routines based on a signal supplied through an external terminal (not shown) of the information processing portion 300. This permits the hold control circuit 400 to issue the execution halt request signal 402 immediately before the desired instruction is executed. Consequently, heretofore, the information processing portion 300 had to be provided with an external output terminal for issuing a control signal to the hold control circuit 400.

As described above, according to the present invention, it is possible to halt the execution of the desired instruction immediately before it is executed, and it is also possible to facilitate the debugging operation, by only issuing the hold request signal as to the desired instruction which is issued from the external unit and should be halted in execution.

Although the embodiments of the present invention described above are provided with the instruction prefetch queue serving as the instruction prefetch means, it is also possible to realize the same operation by employing architecture provided with a plurality of prefetch registers and a plurality of additional registers each of which is used for storing data representing the presence or absence of the hold request corresponding to the instruction stored in each of the prefetch registers.

In addition, in the above embodiments of the present invention, although the address at which the execution of the instruction is halted is detected to issue the hold request signal, it is also possible to monitor, for example, the data bus, thereby permitting the hold request signal to be issued through the specific instruction, the data read operation and the data write operation.

In accordance with the present invention, since the hold control means is provided in the microprocessor, it is possible to halt the execution of the desired instruction stored in the instruction prefetch means immediately before the execution is made, and therefore it is also possible to simplify the debugging system.

## Claims

1. In a microprocessor which prefetches instructions in sequence to sequentially execute said instructions, an improvement wherein;
   means for fetching a hold request signal issued from an external unit in correspondence with the prefetch of said instructions;
   means for halting said execution of said prefetched instructions when said corresponding hold request signal is fetched during the execution of said prefetched instructions.

2. The microprocessor as set forth in claim 1, wherein:
   said microprocessor is provided with a user terminal and is constructed on a single chip.

3. The microprocessor as set forth in claim 2, wherein:
   said microprocessor is further provided with a tool terminal coupled to an evaluation tool.

4. The microprocessor as set forth in claim 1, wherein:
   said hold request signal issued from said external unit is applied at a time when an address signal issued from said microprocessor coincides with a set address.

5. A microprocessor comprising:
   an instruction prefetch means (2, 110) for prefetching an instruction issued form an external unit to store a plurality of said instructions;
   an instruction prefetch control means (3, 120) which issues a fetch address output signal (6) to said external unit when said instructions are prefetched, and issues a read control signal (7, 200) for reading said instructions to said instruction prefetch means (2, 110) when said instructions are read out;
   an instruction execution means (4, 140) for executing said instructions read out of said instruction prefetch means (2, 110); and
   a hold control means (5, 130) which, upon receipt of said read control signal (7, 200) and a hold request signal (8, 201) issued from said external unit, issues to said instruction execution means (4, 140) an instruction halt signal (9, 202) for halting the execution of one of said instructions before said one of said instructions is executed, said instructions being stored in said instruction prefetch means (2, 110).

6. The microprocessor as set forth in claim 5, wherein;
   said instruction prefetch means (2, 110) is provided with a set of first registers of n pieces for prefetching said instructions; and
   said hold control means (5, 130) is provided with a set of second registers of n pieces corresponding to said first registers of n pieces in a one-to-one correlation, each of said second registers being a one-bit type register for storing said hold request signal (8, 201) therein.

7. The microprocessor as set forth in claim 6, wherein:
   said instruction means (2, 110) is provided with both a write pointer and a read pointer;
   according to said write pointer, said first and said second registers prefetch said instructions, and store said hold request signal (8, 201) therein; and
   according to said read pointer, said prefetched instructions and said stored hold request signal (8, 201 ) are issued to said instruction execution means ( 4, 140 ).

8. In a microprocessor which prefetches instructions in sequence to sequentially execute said instructions, an improvement wherein;
   means for issuing a hold request signal from an external unit in correspondence with the prefetch of said instructions;
   means for halting said execution of said prefetched instructions when said corresponding hold request signal is fetched during the execution of said prefetched instructions.

PERSONAL COMPUTER 340

(RS232C)

TELECOMMUNICATION LINE

341

EVALUATION TOOL

344

TO TARGET

CONNECTION

MCU SOCKET 342

TARGET BOARD(SYSTEM) 343

Fig. 1

EP 0 445 042 A2

Fig. 2

EP 0 445 042 A2

EVALUATION TOOL 341

ADDRESS ADR

EVALUATION

MCU

343

COM-
PARATOR

410

HOLD
SIGNAL H

HOLD
CONTROL
PORTION

400

HOLD
ADDRESSING
REGISTER

411

Fig. 3

Fig. 4

EP 0 445 042 A2

EVALUATION TOOL 341

MEMORY 350

ADDRESS

DATA
(INSTRUCTION)

EVALUATION MCU 346

USER SYSTEM

BREAK INSTRUCTION
EXECUTION
DETECTION
CIRCUIT 351

BREAK
INSTRUCTION
EXECUTION
MESSAGE

HOLD
REQUEST
CIRCUIT 352

HOLD REQUEST (IMMEDIATE HALT)

Fig. 5

PROGRAM MEMORY

INSTRUCTION LOCATED AT AN ADDRESS
REQUESTED TO BE HALTED IN EXECUTION

350

③

SAVE

STK

LOCATE A BREAK INSTRUCTION AT AN ADDRESS TO BE HALTED IN EXECUTION

350

EXECUTION

BREAK INSTRUCTION

③

Fig. 6

Fig. 7

ADDRESS

DATA ④ BREAK INSTRUCTION

ACCESSED THROUGH BREAK INSTRUCTION

INSTRUCTION EXECUTION — NORMAL INSTRUCTION — BREAK INSTRUCTION — EXECUTION HALT

⑤

COMPARATOR OUTPUT

HOLD REQUEST

EP 0 445 042 A2

1 : MICROPROCESSOR

INSTRUCTION (OUTPUT)

INSTRUCTION
(INPUT) →

| INSTRUCTION PREFETCH MEANS | 2 |

| INSTRUCTION PREFETCH CONTROL MEANS | 3 |

6 : FETCH ADDRESS OUTPUT SIGNAL

~ 7 : FETCH CONTROL SIGNAL

8 : HOLD REQUEST SIGNAL →

| HOLD CONTROL MEANS | 5 |

INSTRUCTION EXECUTION MEANS 4

9 : INSTRUCTION EXCUTION HALT SIGNAL

Fig. 8

EP 0 445 042 A2

2:INSTRUCTION
PREFETCH MEANS

INSTRUCTION
PREFETCH QUEUE

| FIRST PREFETCH REGISTER | SECOND PREFETCH REGISTER | THIRD PREFETCH REGISTER | FOURTH PREFETCH REGISTER |

$P_1$  $P_2$  $P_3$  $P_4$

Fig. 9

Fig. 10

**100 : MICROPROCESSOR**

214 : PREFETCH ADDRESS OUTPUT SIGNAL  212 : COUNTER SIGNAL
(FROM QUEUE COUNTER 203)

PREFETCH OPERATION CONTROL PORTION — 114

215 : PREFETCH ADDRESS INITIAL VALUE SIGNAL

111 : INSTRUCTION PREFETCH QUEUE — 113

INSTRUCTION (INPUT)

1 st PREFETCH REGISTER — P₁
2 nd PREFETCH REGISTER — P₂
3 rd PREFETCH REGISTER — P₃
4 th PREFETCH REGISTER — P₄

INSTRUCTION SELECTOR PORTION

INSTRUCTION (OUTPUT)

INSTRUCTION EXECUTION PORTION — 140

110 : INSTRUCTION PREFETCH PORTION

203 : WRITE SIGNAL

112 — WRITE SIGNAL GENERATION PORTION

204 : INSTRUCTION WRITE REQUEST SIGNAL

QUEUE WRITE CONTROL PORTION — 121   125 — QUEUE WRITE POINTER

213 : WRITE INSTRUCTION SIGNAL

205 : WRITE CONTROL SIGNAL

209 : WRITE COUNT SIGNAL

208 : QUEUE INITIALIZATION SIGNAL   123

(FROM INSTRUCTION EXECUTION PORTION 140)

QUEUE COUNTER

212 : COUNTER SIGNAL

211 : READ POINTER SIGNAL

200 : READ INSTRUCTION SIGNAL

120 : INSTRUCTION PREFETCH CONTROL PORTION

206 : INSTRUCTION REQUEST SIGNAL   122

210 : READ COUNT SIGNAL

124

(FROM INSTRUCTION EXECUTION PORTION 140)

QUEUE READ CONTROL PORTION

QUEUE READ POINTER

207 : READ CONTROL SIGNAL

202 : INSTRUCTION EXECUTION HALT SIGNAL

132

(EXTERNAL UNIT)

HOLD QUEUE WRITE CONTROL PORTION

1 st HOLD REGISTER — H₁
2 nd HOLD REGISTER — H₂
3 rd HOLD REGISTER — H₃
4 th HOLD REGISTER — H₄

HOLD SELECTOR PORTION

(TO INSTRUCTION EXECUTION PORTION 140)

130 : HOLD CONTROL PORTION

201 : HOLD REQUEST SIGNAL

131 : HOLD QUEUE   133

| INSTRUCTION EXECUTION | EXECUTION(P4) | EXECUTION (P1) | EXECUTION(P2) | EXECUTION HALT |
|---|---|---|---|---|

| INSTRUCTION PREFETCH | P2 FETCH | P3 FETCH | P4 FETCH | P1 FETCH |
|---|---|---|---|---|

| HOLD REQUEST | NONE | PRESENCE | NONE | NONE |
|---|---|---|---|---|

TIME $t_0$ $t_1$ $t_2$ $t_3$ $t_4$

1 ST TO 4TH PREFETCH REGISTERS

Fig.11

USER TERMINAL PORTION

BUS TERMINAL CONTROL CIRCUIT ~602

INTERRUPT CONTROLLER ~603

CLOCK CONTROL CIRCUIT ~604

C P U CORE ~605

~601

F² MCC – 16 BUS

UART ~608

S C I ~609

TIMER I ~610  ×2ch
~610

TIMER II ~611  ×4ch
611~
611~
611~

DTP ~612

ROM ~606

RAM ~607

~600

TOOL INTERFACE PORTION

HOLD CONTROL PORTION ~130

TOOL TERMINAL PORTION

Fig. 12

EP 0 445 042 A2

630

EVALUATION TOOL

632

MEMORY

EVALUATION
MCU

100 (CP)

130

HOLD
CONTROL
PORTION

HOLD
REQUEST
ADDRESSING
REGISTER

COMPA-
RATOR
CIRCUIT

631

633

HOLD REQUEST SIGNAL TO MCU

Fig. 13

Fig. 14

Fig.15

EP 0 445 042 A2